# EUROPEAN PATENT APPLICATION

(11) **EP 2 346 227 A1**
(43) Date of publication of application: **20.07.2011**
(21) Application number: 09819102.6
(22) Date of filing: 29.09.2009
(51) Int. Cl.: H04L 29/08, H04N 7/173

(54) **WIRELESS TRANSMISSION SYSTEM AND WIRELESS TRANSMISSION METHOD**

(30) Priority: 08.10.2008 JP 2008261826
(71) Applicant: Sharp Kabushiki Kaisha, Osaka-shi, Osaka 545-8522 (JP)
(72) Inventor: OHMAE, Ryosuke c/o SHARP KABUSHIKI KAISHA, Osaka-shi, Osaka 545-8522 (JP)
(74) Representative: Müller - Hoffmann & Partner
(86) International application number: PCT/JP2009/066891
(87) International publication number: WO 2010/041567

(57) **Abstract**

Disclosed are a wireless transmission system and a wireless transmission method that prevent CEC protocols from being affected by wireless communication transmission delays or buffering delays and failing when CEC communication is performed wirelessly in the HDMI standard. The CEC control unit of a first wireless communication device (illustrated with a receiver (3)) exchanges CEC messages with the CEC control unit provided for a display device (illustrated with a monitor (4)) using a logical address corresponding to the device type of the AV device (illustrated with STB (1)). The CEC control unit of a second wireless communication device (illustrated with a transmitter (2)) exchanges CEC messages with the CEC control unit provided for STB (1) using a logical address corresponding to the device type of the monitor (4).

## Description

### TECHNICAL FIELD

The present invention relates to a wireless transmission system and a wireless transmission method and more particularly to a wireless transmission system and a wireless transmission method for wirelessly relaying CEC (Consumer Electronics Control) communication of the HDMI (High-Definition Multimedia Interface) standard.

### BACKGROUND ART

Digital interfaces of the HDMI standard are widely used as those for transmission of video/audio, etc. The HDMI standard is arranged for AV (Audio Visual) devices by adding an audio transmission function and a copyright protection function to the DVI (Digital Visual Interface) standard, which is a digital connection standard between a computer body and a display. In the case of the HDMI standard, image (video) data/audio data are transmitted in a mode called TMDS (Transition Minimized Differential Signaling).

To the HDMI standard, CEC rules are added after Version 1.2a (see, e.g., "Supplement 1 Consumer Electronics Control (CEC)" of Nonpatent Literature 1). This CEC protocol is a control protocol that performs control between devices connected through an HDMI cable. The CEC protocol enables various controls based on unique physical and logical addresses assigned to devices present on an HDMI network. For example, while watching digital broadcasting on a television apparatus, if a user starts reproduction by an HDMI-connected DVD (Digital Versatile Disc) player, the television apparatus automatically switches input by itself to a terminal connected to the DVD player. An operation of a menu displayed by the DVD player, power-on/off, etc., can be performed from a remote controller of the television apparatus.

Terms related to CEC are defined in Nonpatent Literature 1; those having an HDMI input terminal are defined as sink devices; and those having an HDMI output terminal to output an AV stream are defined as source devices. Those defined as repeater devices have the HDMI input terminal and output terminal to input/output an AV stream and behave as both the sink device and the source device. The sink devices mainly include display devices; the source devices include STB (Set Top Box), various players for DVD, BD (Blu-ray Disc), etc., and various recorders for DVD, BD, etc., ; and the repeaters include an AV amplifier, etc.

It is recently attempted to perform wireless transmission of video/audio and a CEC message between a displaying device and a source device. However, when transmitting a CEC message by wireless, it is a problem how to the transmitting an ACK bit (ACK bit in the provision of CEC).

In this regard, in Patent Document 1, a wireless transmission method is proposed that enables wireless transmission by a wireless transmission apparatus transmitting ACK bits. In this wireless transmission method, when a first wireless transmission apparatus transmits a CEC message to a second wireless transmission apparatus, the first wireless transmission apparatus samples a wired interface at predetermined intervals, wirelessly sends sampled data to the second wireless transmission apparatus, holds "0" output in the wired interface when a start of ACK bits of a header block or a data block is detected by the wired interface, and holds the "0" output in the wired interface for a specified period of time when a wireless ACK packet indicative of successful reception is received from the second wireless transmission apparatus.

### PRIOR ART DOCUMENTS

### PATENT DOCUMENTS

Patent Document 1: Japanese Laid-Open Patent Publication No. 2007-214952

### Nonpatent Document

Nonpatent Document 1: High-Definition Multimedia Interface Specification Version 1.3a, November 10, 2006

### SUMMARY OF THE INVENTION

### PROBLEMS TO BE SOLVED BY THE INVENTION

However, only the transmission of ACK bits is performed in the wireless transmission method described in Patent Document 1 and, therefore, the CEC protocol is likely to fail under the influence of a transmission delay, a buffering delay, etc., of wireless communication. If a wireless communication channel without a sufficient band is used, a useless transmission may occur.

These problems will more specifically be described. First, CEC is a communication protocol based on the premise that a metal line is physically connected in an HDMI network. In the communication using CEC, a pulse is created by mutually dropping a common metal line pulled up to High (3.3 V) to Low and, therefore, if a section not sharing the metal line exists as in the case of a wireless transmission section, a delay always occurs and a correct pulse cannot be created. Therefore, in the wireless transmission technique of HDMI, it is impossible to implement the communication of CEC in accordance with the protocol.

Even if the wireless transmission method described in Patent Document 1 is applied, partially because all the CEC messages must be exchanged among all the devices, a response within a specified response time cannot be expected due to a transmission delay (including a delay at the time of response) of wireless communication and the CEC protocol is likely to fail. Especially in a system transmitting uncompressed video in HD (High Definition) resolution, since a transmission band must be allocated to video/audio to the maximum extent possible, a sufficient band cannot be ensured for other communications including the CEC communication and a response within a specified response time cannot be expected. If a sufficient band is not ensured as described above, the wireless transmission of a CEC message is wasted. If buffering is simply used, an arrangement of the buffering itself causes a great delay because the CEC communication is a very slow communication, and therefore a response satisfying the response time cannot be made in a protocol specifying the response time, such as CEC.

Even if the wireless transmission system described in Patent Document 1 is applied, the system may break down when a wireless transmission channel becomes too unstable to perform communication. More specifically, if such a situation occurs, if an ACK bit is returned to the CEC message transmission side, the CEC message transmission side determines that the transmission of a CEC message is completed even though the CEC message reception side does not receive the CEC message, and this causes an inconsistency and the system breaks down.

The present invention was conceived in view of the situations and it is therefore an object of the present invention to provide a wireless transmission system and a wireless transmission method capable of preventing a CEC protocol from failing under the influence of a transmission delay, a buffering delay, etc., of wireless communication when CEC communication of the HDMI standard is wirelessly performed.

### MEANS FOR SOLVING THE PROBLEMS

In order to solve the above problem, a first technical means of the present invention is a wireless transmission system comprising a first wireless communication device having a CEC control portion capable of transmitting/receiving a CEC message in HDMI to/from a display device and a second wireless communication device having a CEC control portion capable of transmitting/receiving a CEC message in HDMI to/from an AV device, the wireless transmission system performing transmission/reception of a CEC message between the display device and the AV device through wireless communication between the first wireless communication device and the second wireless communication device, wherein the CEC control portion of the first wireless communication device using a logical address corresponding to a device type of the AV device to transmit/receive a CEC message to/from a CEC control portion disposed in the display device, the CEC control portion of the second wireless communication device using a logical address corresponding to a device type of the display device to transmit/receive a CEC message to/from a CEC control portion disposed in the AV device.

A second technical means is the wireless transmission system of the first technical means wherein the first wireless communication device determines whether the transmission to the AV device is necessary depending on a type of a CEC message received from the display device and performs wireless transmission to the second wireless communication device only for the CEC message determined to have a need to be transmitted, and wherein the second wireless communication device determines whether the transmission to the display device is necessary depending on a type of a CEC message received from the AV device and performs wireless transmission to the first wireless communication device only for the CEC message determined to have a need to be transmitted.

A third technical means is the wireless transmission system of the first or second technical means, wherein the first wireless communication device determines whether a CEC message received from the display device is required to have a response time limit for the display device shorter than a predetermined time, and makes a response as a substitute for the AV device to the display device for the CEC message required to have the shorter response time limit, and wherein the second wireless communication device determines whether a CEC message received from the AV device is required to have a response time limit for the AV device shorter than the predetermined time, and makes a response as a substitute for the display device to the AV device for the CEC message required to have the shorter response time limit.

A fourth technical means is the wireless transmission system of any one of the first to third technical means, wherein the CEC control portion of the first wireless communication device returns no ACK bit to the display device even if a CEC message is received from the display device while falling into a situation that the first wireless communication device is unable to perform the wireless communication with the second wireless communication device, and wherein the CEC control portion of the second wireless communication device returns no ACK bit even if a CEC message is received from the AV device while falling into a situation that the second wireless communication device is unable to perform the wireless communication with the first wireless communication device.

A fifth technical means is the wireless transmission system of any one of the first to fourth technical means, wherein the CEC control portion of the first wireless communication device is externally connected to the CEC control portion disposed in the display device or is built into the display device and connected to the CEC control portion disposed in the display device, and wherein the CEC control portion of the second wireless communication device is externally connected to the CEC control portion disposed in the AV device or is built into the AV device and connected to the CEC control portion disposed in the AV device.

A sixth technical means is a wireless transmission method using a first wireless communication device having a CEC control portion capable of transmitting/receiving a CEC message in HDMI to/from a display device and a second wireless communication device having a CEC control portion capable of transmitting/receiving a CEC message in HDMI to/from an AV device to perform transmission/reception of a CEC message between the display device and the AV device through wireless communication between the first wireless communication device and the second wireless communication device, the method including the steps of using a logical address corresponding to a device type of the AV device by the CEC control portion of the first wireless communication device to transmit/receive a CEC message to/from a CEC control portion disposed in the display device, and using a logical address corresponding to a device type of the display device by the CEC control portion of the second wireless communication device to transmit/receive a CEC message to/from a CEC control portion disposed in the AV device.

### EFFECT OF THE INVENTION

According to the present invention, a CEC protocol can be prevented from failing under the influence of a transmission delay, a buffering delay, etc., of wireless communication when CEC communication of the HDMI standard is wirelessly performed.

### BRIEF DESCRIPTION OF DRAWINGS

[Fig. 1] Fig. 1 is a block diagram of one exemplary configuration of a wireless transmission system according to the present invention.
[Fig. 2] Fig. 2 is a schematic for explaining transmission/reception of a CEC message between devices in the wireless transmission system of Fig. 1.
[Fig. 3] Fig. 3 is a flowchart for explaining a process example of a pretense operation from the time of power-on in the wireless transmission system of Fig. 1.
[Fig. 4] Fig. 4 is a flowchart for explaining a process example when a remote controller is operated after the process at the time of power-on in the wireless transmission system of Fig. 1.
[Fig. 5] Fig. 5 is a diagram for explaining the case that a response is delayed when a certain CEC message is transmitted/received after the process at the time of power-on in the wireless transmission system of Fig. 1.
[Fig. 6] Fig. 6 is a flowchart for explaining a process example when a CEC message is transmitted from STB after the process at the time of power-on in the wireless transmission system of Fig. 1.
[Fig. 7] Fig. 7 is a flowchart for explaining a process example when a CEC message is transmitted from STB after the process at the time of power-on in the wireless transmission system of Fig. 1.
[Fig. 8] Fig. 8 is a flowchart for explaining a process example when a CEC message is transmitted from STB after the process at the time of power-on in the wireless transmission system of Fig. 1.
[Fig. 9] Fig. 9 is a flowchart for explaining a process example when a CEC message is transmitted from STB after the process at the time of power-on in the wireless transmission system of Fig. 1.
[Fig. 10] Fig. 10 is a flowchart for explaining a process example when a CEC message is transmitted from STB after the process at the time of power-on in the wireless transmission system of Fig. 1.
[Fig. 11] Fig. 11 is a flowchart for explaining a process example when a CEC message is transmitted from STB after the process at the time of power-on in the wireless transmission system of Fig. 1.
[Fig. 12] Fig. 12 is a schematic for explaining the case that a CEC message between devices in the wireless transmission system of Fig. 1 is unable to be communicated through a wireless transmission channel.

### EMBODIMENTS OF THE INVENTION

A wireless transmission system (hereinafter, the system) according to the present invention includes a first wireless communication device having a CEC control portion capable of transmitting/receiving a CEC message to/from a display device and a second wireless communication device having a CEC control portion capable of transmitting/receiving a CEC message to/from an AV device.

The system is a system that communicates a CEC message between the display device and the AV device through the wireless communication between the first wireless communication device and the second wireless communication device (i.e., by relaying through the wireless communication between the wireless communication devices) and the method described in Patent Document 1 may be employed for a method to transmit a CEC message including an ACK bit by wireless.

However, the method described in Patent Document 1 is likely to fail due to a delay as described above and, therefore, the system is mainly characterized in that each of the first wireless communication device and the second wireless communication device pretends another device (a CEC compatible device on the opposite side across a wireless transmission channel and the other wireless communication device). This pretense can establish two CEC networks sectionalized by the wireless transmission channel and a delay causing a break down hardly occurs in the CEC networks.

Although the present invention will now be described by reference to a system that employs a monitor as the display device, the display device may be a television apparatus with a tuner. Although the description will be made by reference to a system that employs STB as the AV device (AV device other than the display device), the AV device is not limited to the STB and may be various recorders and players such as BD, DVD, etc., a simple tuner device, a personal computer (PC), and a game device. The AV device is not limited to a source device and may be a repeater device (such as AV amplifier, and STB and recorder with an HDMI input terminal). However, as described later in an exemplary configuration, these display and AV devices are assumed to be CEC compatible devices.

### <Exemplary Configuration of Wireless Transmission System According to the Present Invention>

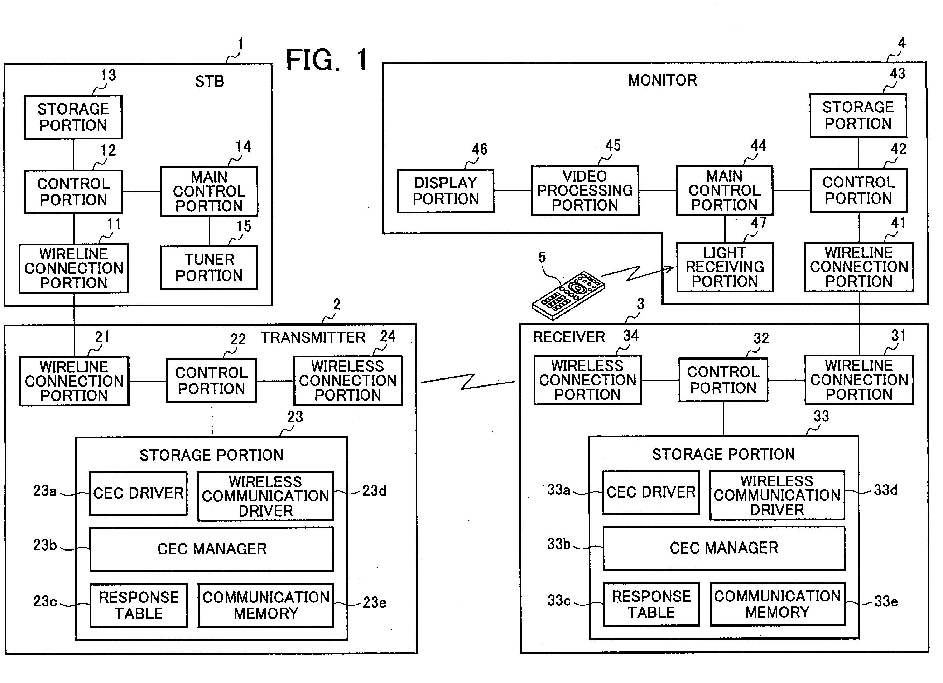

Fig. 1 is a block diagram of one exemplary configuration of a wireless transmission system according to the present invention; in Fig. 1, 1 denotes an STB as an example of the AV device; 2 denotes a transmitter as an example of the second wireless communication device; 3 denotes a receiver as an example of the first wireless communication device; and 4 denotes a monitor as an example of the display device.

### (Devices on Transmission Side)

The STB 1 includes a wireline connection portion 11, a control portion 12, and a storage portion 13 for supporting CEC and also includes other constituent elements for implementing functions as STB, such as a main control portion 14 and a tuner portion 15. The main control portion 14 controls the whole of the STB 1 including the control portion 12. The tuner portion 15 has a tuner that receives broadcasts, a demodulating portion that demodulates the broadcasts, a decoder that decodes the demodulated video/audio data, etc.

The wireline connection portion 11 is an HDMI I/F for connecting an HDMI cable. Therefore, the wireline connection portion 11 is connected to the following lines included in the HDMI cable. The HDMI cable includes a CEC line that is a bidirectional bus transmitting a control signal (CEC message) common to the devices. In the CEC protocol, the transmission side can transmit a CEC message to an intended device by specifying a logical address determined depending on a device type as a destination (transmission destination). The reception side receives the CEC message if the logical address of the reception side is described as the destination in this CEC message (the logical address may be included as broadcast transmission, etc.), and can recognize the transmission side from a logical address of a transmission source described in this CEC message.

The HDMI cable also includes a TMDS line for transmitting streams of video/audio signals that are digital signals in a differential mode, a DDC (Display Data Channel) line utilized for transmission of EDID (Extended Display Identification Data), etc., in addition to the CEC line. The EDID includes information about a type of signals processable by a display device, information such as resolution of a display panel, and information such as a pixel clock, a horizontal effective period, and a vertical effective period. The EDID is acquired from the video display side (the monitor 4 in this example) by the video transmission side (the STB 1 in this example) to transmit a video signal adapted to the resolution of a display panel to be used (a display panel of the monitor 4 in this example).

The control portion 12 is connected to the CEC line in the wireline connection portion 11. The control portion 12 decodes a CEC message that is transmitted through the CEC line and received by the wireline connection portion 11 and returns an ACK bit or a response (response of status, etc.) to a CEC message transmission source (the transmitter 2 in this example) through the CEC line in response to the CEC message as needed. The control portion 12 delivers the decoded CEC message to the main control portion 14 as needed and the main control portion 14 controls the whole of the STB 1 to execute a process corresponding to the CEC message. For example, at the time of power-on or when accepting an operation on the STB 1, the control portion 12 receives an instruction from the main control portion 14, generates a CEC message corresponding to the instruction, and transmits the CEC message through the wireline connection portion 11.

The storage portion 13 stores programs and information, which are read from the control portion 12 as needed. The control portion 12 and the storage portion 13 correspond to a CEC control portion and may be made up of a microcomputer, for example. The information includes a response table for specifying operations. The programs include a CEC driver and a CEC manager.

The CEC driver is a program for transmitting and receiving a CEC message through the CEC line and, more particularly, executes controls for reading a voltage of the CEC line in the wireline connection portion 11, short-circuiting the CEC line, etc. Although described as a program, the CEC driver may be made up of hardware only. The CEC manager is a program that instructs the CEC driver to return an ACK bit or a response or transfers an instruction corresponding to the CEC message to the main control portion 14 by interpreting the CEC message received by the CEC driver and referring to the response table. The CEC manager also includes a program that receives an instruction from the main control portion 14, generates a CEC message corresponding to the instruction referring to the response table, and deliveres the CEC message via the wireline connection portion 11 to the CEC driver for transmission.

An HDMI transmitter (not shown) is connected between the main control portion 14 and the wireline connection portion 11. The HDMI transmitter transmits a packet stream of video/audio signals received by the tuner portion 15 from the wireline connection portion 11 to a wireline connection portion 21 of the transmitter 2 in the TMDS mode. In this case, the packet stream is transmitted through TMDS channels of the TMDS line in the HDMI cable. The video signal transmitted by the HDMI transmitter is a signal having the resolution converted and adapted to the display panel of the monitor 4 as described above and may be a video signal subjected to another video processing depending on a configuration of the STB 1. The audio signal transmitted by the HDMI transmitter may be an audio signal subjected to audio processing depending on a configuration of the STB 1.

The transmitter 2 includes the wireline connection portion 21, a control portion 22, and a storage portion 23 for supporting CEC and also includes a wireless connection portion (wireless communication portion) 24 for enabling wireless communication. The wireline connection portion 21 is an HDMI I/F for connecting an HDMI cable and is connectable to the wireline connection portion 11 of the STB 1 via this HDMI cable. By means of the connection between the wireline connection portion 11 and the wireline connection portion 21 through the HDMI cable, the STB 1 and the transmitter 2 can transmit and receive CEC messages.

The control portion 22 is connected via the wireline connection portion 21 to the CEC line of the HDMI cable and is also connected to the wireless connection portion 24. The control portion 22 decodes a CEC message transmitted through the CEC line and received by the wireline connection portion 21, returns an ACK bit or a response to a CEC message transmission source (the STB 1 in this example) through the CEC line in response to the CEC message, and transmits the decoded CEC message by wireless to the receiver 3 via the wireless connection portion 24 as needed. The control portion 22 decodes the wireless-transmitted information (information indicative of the CEC message) received by the wireless connection portion 24 and transmits (transfers) the decoded CEC message to the STB 1 through the CEC line in the wireline connection portion 21.

In such transmission/reception of the CEC message, the transmission/reception between the STB 1 and the transmitter 2 is executed with the transmitter 2 pretending the monitor 4. A configuration for this pretense is a main characteristic of the present invention and will be described.

The storage portion 23 stores programs and information, which are read from the control portion 22 as needed. The control portion 22 and the storage portion 23 may be made up of a microcomputer, for example. The information stored in the storage portion 23 includes a response table 23c for specifying operations. This response table 23c is utilized for the pretense.

In the response table 23c of the transmitter 2, an operation for behaving as a CEC compatible device to be pretended ("TV" corresponding to the monitor 4 in this case) is preset in advance. This operation is defined such that a CEC control portion of the transmitter 2 transmits/receives CEC messages to/from a CEC control portion of the AV device (the STB 1 in this example) by using a logical address (0) corresponding to the device type (TV) of the monitor 4 on the opposite side across the wireless transmission channel and the receiver 3. If a response to the STB 1 is required, the response may be returned to the STB 1 basically after waiting the information indicative of a CEC message of a response from the monitor 4 (actually, the receiver 3). The CEC control portion of the transmitter 2 mainly corresponds to the control portion 22, the CEC driver 23a, and the CEC manager 23b and the CEC control portion of the STB 1 mainly corresponds to the control portion 12 and the storage portion 13.

By simply using the logical address "0" in the transmitter 2, it is possible to transmit/receive the CEC messages to/from the STB 1 as defined in the CEC protocol (including vendor commands). The vendor commands mean commands specified by Vendor Specific Commands, for example, <Vender Command> and <Vendor command with ID> that allow a vendor (manufacturer) to uniquely specify operations. When operations are uniquely specified, the specifications may be described in Vendor Specific Data in these commands (messages).

Although the transmitter 2 transmits information indicative of a CEC message (i.e., a wireless message corresponding to a CEC message) to the receiver 3, the transmitter 2 transfers only the information indicative of the CEC message received from the STB 1 (the CEC message including the logical address of the STB 1 as the transmission source) by wireless, rather than performing the transmission to the receiver 3 by using the logical address (0) used by the transmitter 2 itself as the transmission source.

The programs stored in the storage portion 23 include the CEC driver 23a, the CEC manager 23b, a wireless communication driver 23d, etc. The CEC driver 23a is the same as the CEC driver of the STB 1 and is a driver for transmitting/receiving a CEC message through the CEC line. The CEC manager 23b interprets the CEC message received by the CEC driver 23a from the STB 1 and refers to the response table 23c to instruct the CEC driver 23a to return an ACK bit or a response or refers to the response table 23c to deliver the information indicative of the CEC message to the wireless communication driver 23d to drive the wireless connection portion 24 to transmit the information by wireless. The wireless communication driver 23d is a driver that drives the wireless connection portion 24 to transmit the information indicative of a CEC message by wireless based on an instruction from the CEC manager 23b and may be made up of hardware only although described as a program.

The wireless communication driver 23d also executes processing for delivering the information indicative of a CEC message received by the wireless connection portion 24 from the receiver 3 to the CEC manager 23b. When receiving the information indicative of a CEC message from the wireless communication driver 23d, the CEC manager 23b interprets (extracts) the CEC message and refers to the response table 23c to instruct the CEC driver 23a to transmit the CEC message to the STB 1.

An HDMI receiver (not depicted) is connected between the wireless connection portion 24 and the wireline connection portion 21. This HDMI receiver receives through the wireline connection portion 21 a video/audio packet transmitted via the wireline connection portion 11 from the HDMI transmitter of the STB 1 through the TMDS line and delivers the packet to the wireless connection portion 24. The video/audio packet received by the HDMI receiver of the transmitter 2 is configured so as to be transmitted by wireless through the wireless connection portion 24. The video/audio packet may be transmitted by wireless by assigning a TMDS channel in the same way that is done in the transmission through the TMDS line.

### (Devices on Reception Side)

The monitor 4 includes a wireline connection portion 41, a control portion 42, and a storage portion 43 for supporting CEC and also includes other constituent elements for implementing functions as a monitor, such as a main control portion 44, a video processing portion 45 such as a video processor, a display portion 46 having a display panel such as LCD, and a light receiving portion 47. The main control portion 44 controls the whole of the monitor 4 including the control portion 42. The light receiving portion 47 receives and delivers an operation signal from the remote controller 5 to the main control portion 44.

The wireline connection portion 41 is an HDMI I/F for connecting an HDMI cable. The control portion 42 is connected to the CEC line in the wireline connection portion 11. The control portion 42 transmits EDID to the receiver 3 and EDID is transmitted via the transmitter 2 to the STB 1 to enable the STB 1 to transmit a video signal adapted to the display resolution of the display portion 46. The control portion 42 decodes a CEC message transmitted through the CEC line and received by the wireline connection portion 41 and returns an ACK bit or a response to the CEC message through the CEC line to a CEC message transmission source (the receiver 3 in this example) as needed. The control portion 42 delivers the decoded CEC message to the main control portion 44 as needed and the main control portion 44 controls the whole of the monitor 4 to execute processing according to the CEC message. For example, at the time of power-on or when accepting an operation signal of user's operation by the light receiving portion 47, the control portion 42 receives an instruction from the main control portion 44, generates a CEC message depending on the instruction, and transmits the CEC message through the wireline connection portion 41.

The storage portion 43 stores programs and information, which are read from the control portion 42 as needed. The control portion 42 and the storage portion 43 correspond to a CEC control portion and may be made up of a microcomputer, for example. The information includes a response table for specifying operations. The programs include a CEC driver and a CEC manager.

The CEC driver is a program for transmitting and receiving a CEC message through the CEC line and, more particularly, reads a voltage of the CEC line in the wireline connection portion 41 and controls an applied voltage. Although described as a program, the CEC driver may be made up of hardware only. The CEC manager is a program that instructs the CEC driver to return an ACK bit or a response or transfers an instruction corresponding to the CEC message to the main control portion 44 by interpreting the CEC message received by the CEC driver and referring to the response table. The CEC manager also includes a program that receives an instruction from the main control portion 44, generates a CEC message corresponding to the instruction referring to the response table, and deliveres the CEC message via the wireline connection portion 41 to the CEC driver for transmission.

An HDMI receiver (not depicted) is connected between the video processing portion 45 and the wireline connection portion 41. The HDMI receiver receives a stream of video/audio signals (signals originally acquired by the tuner portion 15 of the STB 1) from the receiver 3 via the wireline connection portion 41, demultiplexes the stream into video/audio signals, and outputs the video signals (video signals adapted to the resolution of the display portion 46) to the video processing portion 45. The video processing portion 45 gives various types of video processing to the video signals and outputs the video signals to the display portion 46 based on the instruction from the main control portion 44, and the display portion 46 displays the video. The HDMI receiver outputs the demultiplexed audio signals to an audio processing portion (not depicted) ; the audio processing portion executes types of audio processing and outputs the audio signals to a speaker (not depicted) based on the instruction from the main control portion 44, and the speaker outputs sound.

The receiver 3 includes a wireline connection portion 31, a control portion 32, and a storage portion 33 for supporting CEC and also includes a wireless connection portion (wireless communication portion) 34 for enabling wireless communication. The wireline connection portion 31 is an HDMI I/F for connecting an HDMI cable and is connectable to the wireline connection portion 41 of the monitor 4 via this HDMI cable. By means of the connection between the wireline connection portion 31 and the wireline connection portion 41 through the HDMI cable, the receiver 3 and the monitor 4 can transmit and receive CEC messages.

The control portion 32 is connected via the wireline connection portion 31 to the CEC line of the HDMI cable and is also connected to the wireless connection portion 34. The control portion 32 decodes a CEC message that is transmitted through the CEC line and received by the wireline connection portion 31, returns an ACK bit or a response to a CEC message transmission source (the monitor 4 in this example) through the CEC line in response to the CEC message as needed, and transmits the decoded CEC message by wireless to the transmitter 2 via the wireless connection portion 34 as needed. The control portion 32 decodes the wireless-transmitted information (information indicative of the CEC message) received by the wireless connection portion 34 and transmits the decoded CEC message to the monitor 4 through the CEC line in the wireline connection portion 31.

In such transmission/reception of the CEC message, the transmission/reception between the monitor 4 and the receiver 3 is executed with the receiver 3 pretending the STB 1. A configuration for this pretense is a main characteristic of the present invention and will be described.

The storage portion 33 stores programs and information, which are read from the control portion 32 as needed. The control portion 32 and the storage portion 33 may be made up of a microcomputer, for example. The information stored in the storage portion 33 includes a response table 33c for specifying operations. For the pretense, a pretense utilizing this response table 33c is performed on the reception side in addition to a pretense on the transmission side (the response table 23c of the transmitter 2).

In the response table 33c of the receiver 3, an operation for behaving as a CEC compatible device to be pretended ("Tuner" corresponding to the STB 1 in this case) is preset in advance. This operation is defined such that a CEC control portion of the receiver 3 transmits/receives CEC messages to/from a CEC control portion of the display device (the monitor 4 in this example) by using a logical address (any one of 3, 6, 7, and 10) corresponding to the device type (Tuner) of the STB 1 on the opposite side across the wireless transmission channel and the transmitter 2. If a response to the monitor 4 is required, the response may be returned to the monitor 4 basically after waiting information indicative of a CEC message of a response from the STB 1 (actually, the transmitter 2). The CEC control portion of the receiver 3 mainly corresponds to the control portion 32, the CEC driver 33a, the CEC manager 33b, and the response table 33c and the CEC control portion of the monitor 4 mainly corresponds to the control portion 42 and the storage portion 43.

By simply using the logical address "any one of 3, 6, 7, and 10" in the receiver 3, it is possible to transmit/receive the CEC messages to/from the monitor 4 as defined in the CEC protocol (including vendor commands). Although the receiver 3 transmits information indicative of a CEC message (i.e., a wireless message corresponding to a CEC message) to the transmitter 2, the receiver 3 wirelessly transfers only the information indicative of the CEC message received from the monitor 4 (CEC message including the logical address "0" of the monitor 4 as the transmission source) by wireless, rather than performing the transmission to the transmitter 2 by using the logical address (any one of 3, 6, 7, and 10) used by the receiver 3 itself as the transmission source.

The programs stored in the storage portion 33 include the CEC driver 33a that is the same as the CEC driver 23a, the CEC manager 33b, a wireless communication driver 33d, etc. The CEC manager 33b interprets the CEC message received by the CEC driver 33a from the monitor 4 and refers to the response table 33c to instruct the CEC driver 33a to return an ACK bit or a response or refers to the response table 33c to deliver the information indicative of the CEC message to the wireless communication driver 33d and drive the wireless connection portion 34 to transmit the information by wireless. The wireless communication driver 33d is a driver that drives the wireless connection portion 34 to transmit the information indicative of a CEC message by wireless based on an instruction from the CEC manager 33b and may be made up of hardware only although described as a program.

The wireless communication driver 33d also executes processing for delivering the information indicative of a CEC message received by the wireless connection portion 34 from the transmitter 2 to the CEC manager 33b. When receiving the information indicative of a CEC message from the wireless communication driver 33d, the CEC manager 33b interprets (extracts) the CEC message and refers to the response table 33c instructs the CEC driver 33a to transmit the CEC message to the monitor 4.

In the case of the receiver 3, unlike the transmitter 2, the operation to be preset is different depending on whether it is desired to achieve the CEC connection of the STB 1 by wireless as exemplarily depicted in Fig. 1 or to achieve the CEC connection of a recorder or player by wireless. Therefore, the response table 33c may preliminarily store an operation corresponding to each of the all or a plurality of devices that are AV devices other than the display device such that a user can select a device (the device to be communicated) with a switch button disposed on the receiver 3, for example. Only the operation corresponding to the device selected by the user may be set to be enabled in the response table 33c.

In the CEC protocol, 3, 6, 7, and 10 are arranged as logical addresses corresponding to Tuner and the receiver 3 may set any one of these addresses as described above. If a tuner device other than the STB 1 exists in a lower layer of the STB 1 of a wired CEC network on the transmission side, the logical address of the STB 1 may be "6" in some cases. Although it may be specified to detect that a tuner device other than the STB 1 has first declared Tuner 1 (logical address 3) from a CEC message (vendor command) on the reception side and to reset the tuner device as Tuner 2 (logical address 6), as long as Tuner 1 does not exist in the wired CEC network on the reception side, even if the operation of the logical address 3 (a value different from the logical address of the STB 1) is preset for the receiver 3, when the transmitter 2 interprets a wireless message indicative of a CEC message for the logical address 3 and transmits the message through the CEC line, the transmission may be performed with the logical address rewritten from 3 to 6 (because it is known that the STB 1 corresponds to "6") without trouble.

An HDMI transmitter (not depicted) is connected between the wireless connection portion 34 and the wireline connection portion 31. The HDMI transmitter converts a video/audio packet received by the wireless connection portion 34 into the TDMS format and transmits the video/audio packet via the wireline connection portion 31 and the TDMS line to the monitor 4(the HDMI receiver of the monitor 4) for each TDMS channel.

### (Summary of the Exemplary Configuration)

As described above, the wireless transmission system of Fig. 1 introduces the mechanism that the transmitter (Tx) 2 performs communications as the monitor 4 and the receiver (Rx) 3 performs communications as the STB 1 in the case of the wireless transmission between the STB 1 and the monitor 4.

More specifically, an operation for behaving as a pretended device is preset for a pretending device in the response table 23c (/the response table 33c); the transmitter 2 (/the receiver 3) acquires a logical address of the monitor 4 (/the STB 1) located on the opposite side and receives a CEC message from the STB 1 (/the monitor 4) to transmit the received CEC message to the monitor 4 (/the STB 1) side; and a CEC message received from the monitor 4 (/the STB 1) side can also be transmitted to the STB 1 (/the monitor 4). The CEC manager 23b (/33b) receives data received by each of the CEC driver 23a (/33a) and the wireless communication driver 23d (/33d) to perform the control of determining and delivering to the wireless communication driver 23d "a CEC message to be transmitted as a wireless message" to the CEC message opposite side (CEC message transmission destination) to be responded, from the response table 23c (/33c) (and communication history information stored in a communication memory 23e/33e as in an example described later) and the control of determining and delivering to the CEC driver 23a a CEC message of an ACK bit or a response to the CEC message transmission source, from the response table 23c (/33c) (and the communication history information).

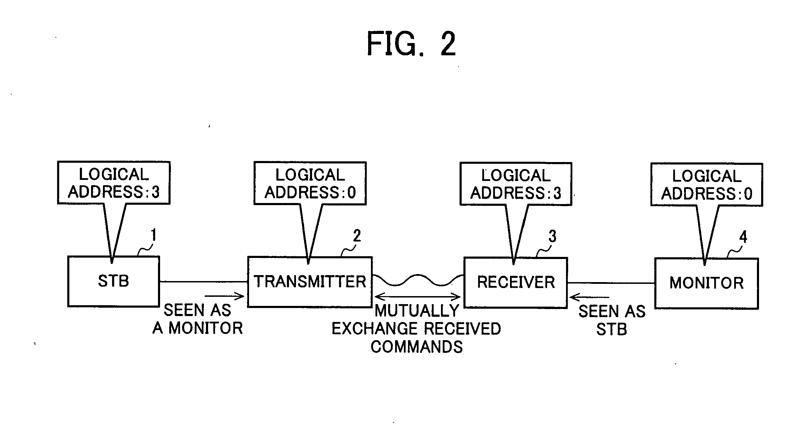

Description will be made with reference to Fig. 2. Fig. 2 is a schematic for explaining transmission/reception of a CEC message between devices in the wireless transmission system of Fig. 1. The transmitter 2 is seen as the monitor 4 having the logical address 0 from the STB 1; the receiver 3 is seen as the STB 1 having any one of the logical addresses 3, 6, 7, and 10 ("3" in this example) from the monitor 4; and the CEC messages (CEC commands) received from the STB1 and the monitor 4 can be mutually exchanged between the transmitter 2 and the receiver 3. Therefore, the transmitter 2 returns an ACK bit in response to a CEC message to the logical address of TV from the STB 1 and transmits the CEC message to the receiver 3, and the receiver 3 transmits the CEC message to the monitor 4 as a Tuner. On the contrary, the receiver 3 returns an ACK bit in response to a message to the logical address of the STB from the TV and transmits the message to the transmitter 2, and the transmitter 2 transmits the message to the STB 1 as a TV.

Such a configuration enables the CEC communication through the wireless transmission channel, which is conventionally deemed impossible because of delay, without changing protocols, etc., in both the monitor 4 and the STB 1 . Particularly, the transmitter 2 and the receiver 3 can ignore CEC messages to the pretended devices because of the pretense (imitation) and, therefore, it is no longer necessary to perform the wireless transmission for all the CEC messages to the other side and, because transmissions from a plurality of devices may be congested, more delays are eliminated at least in this respect. The pretense also enables the implementation of "a process corresponding to a type of a CEC message" and "processing for returning a response by the transmitter 2 or the receiver 3 as a substitute depending on time limit for response of a CEC message" described later.

### <Example of Transmission/Reception of CEC message in the Exemplary Configuration>

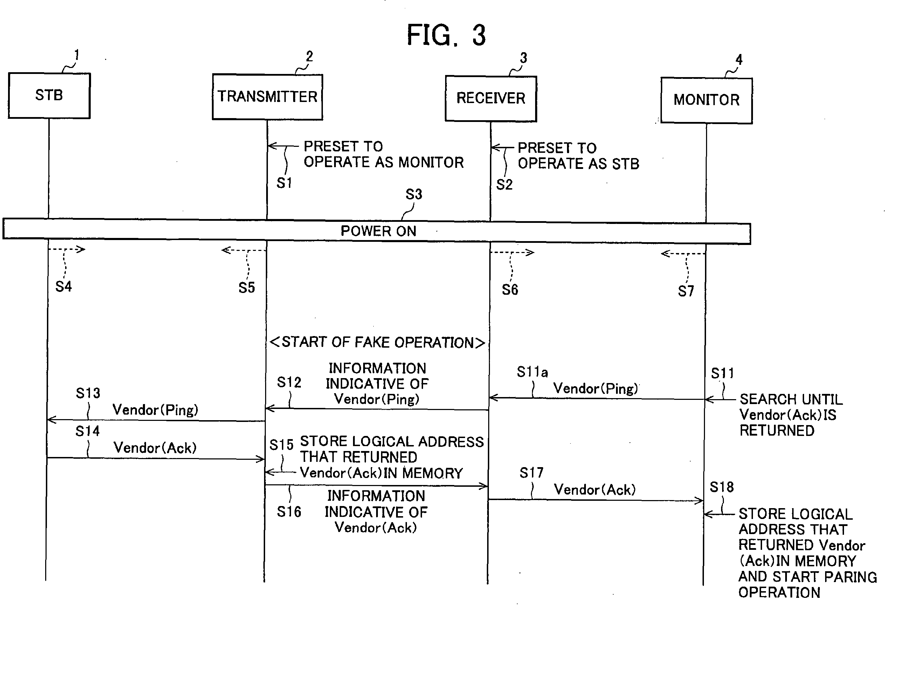

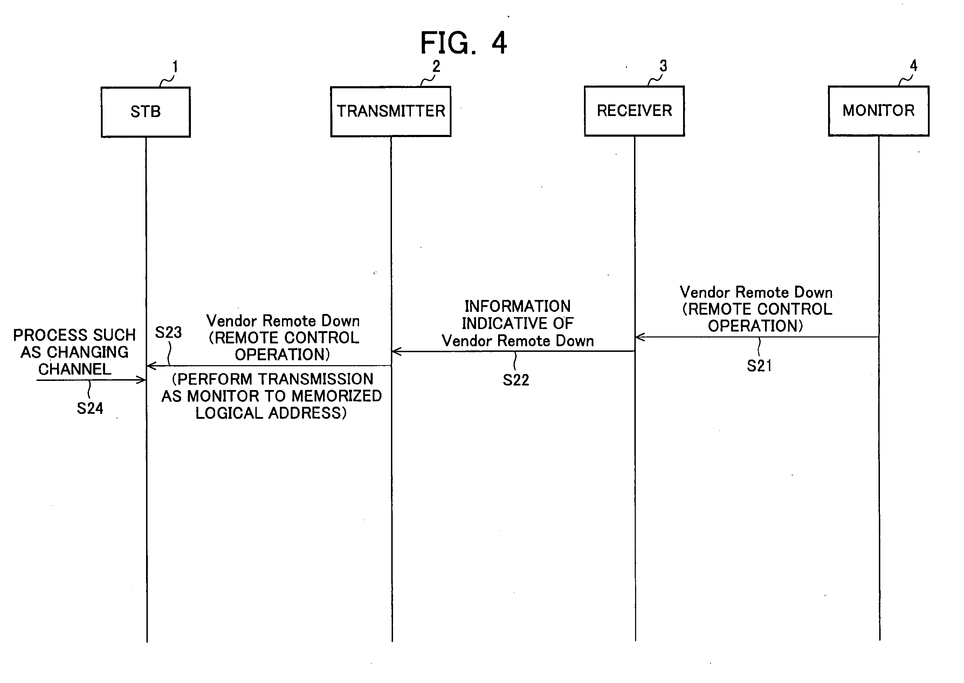

Fig. 3 is a flowchart for explaining a process example of a pretense operation from the time of power-on in the wireless transmission system of Fig. 1. In Fig. 3 and Figs. 4 to 11 described later, arrows are depicted to represent transmissions between devices; a solid line arrow indicates that an ACK bit is returned; and a broken line arrow indicates that no ACK bit is returned. For example, step S4 of Fig. 3 indicates the absence of the return of the ACK bit and step S13 indicates the presence of the return of the ACK bit from the STB 1 to the transmitter 2. However, although no ACK bit is transmitted in the communication between the transmitter 2 and the receiver 3 because this communication conforms to a protocol specific to the wireless communication and is different from CEC, it is assumed that the communication is ensured in some way. This rule of depiction is not applied to arrows other than transmission, for example, steps S1, S2, and S15, and step S24 of Fig. 4.

The transmitter 2 has the response table 23c preset to operate as the monitor 4 (step S1) and the receiver 3 has the response table 33c preset to operate as the STB 1 (step S2).

In such a state, while the CEC connection is achieved between the STB 1 and the transmitter 2 through the HDMI cable and the CEC connection is achieved between the receiver 3 and the monitor 4 through the HDMI cable, when each device is turned on (powered on) (step S3), the STB 1 checks whether another STB (a device corresponding to Tuner) exists, so as to declare itself as STB (assumed to have the logical address 3) (step S4). The receiver 3 checks whether another STB (a device corresponding to Tuner) exists, so as to declare itself as STB (assumed to have the logical address 3) (step S6). Therefore, at steps S4 and S6, it is confirmed that no ACK bit is returned through the CEC communication destined for STB. This communication may be performed by <Poling Message>, for example.

In the same way, the transmitter 2 checks whether another TV exists, so as to declare itself as TV (the logical address 0) (step S5) and the monitor 4 checks whether another TV exists, so as to declare itself as TV (the logical address 0) (step S7). Therefore, at steps S5 and S7, it is confirmed that no ACK bit is returned through the CEC communication destined for TV. The confirmation processing (any one of steps S4 to S7) may be performed from a device powered on and connected to the HDMI cable, regardless of the order of the power-on at step S3 and the fact which is performed earlier, the power-on or the connection to the HDMI cable. Although each of the devices 1 to 4 can determine a logical address by the processing at steps S4 to S7 in the exemplary configuration of Fig. 1, if an ACK bit is returned because another device is connected, it may be attempted to set another logical address of the same device type in the same way.

Although not depicted in Fig. 3, an arrangement has been made to transmit <Device Vendor ID>, which is a message for broadcast transmission of Vender ID (unique Vender ID defined by IEEE organization) stored in each of the devices, after steps S4 to S7. At least the monitor 4 completes this transmission before transmitting the vendor commands described below. Among the devices 1 to 3, a device with Vendor ID not received by the monitor 4 may be driven to make a notification of Vendor ID by <Give Device Vendor ID> before transmitting the vendor commands described below. The vendor commands described below can basically be received when Vendor IDs are the same (or when executing processing in which Vendor IDs can be considered as the same).

Once the logical addresses are determined in the devices 1 to 4 as described above, the transmitter 2 and the receiver 3 start the pretense operation according to the present invention. Therefore, once the logical addresses are determined, the transmitter 2 starts operating as the monitor 4 on the CEC line to which the transmitter 2 is connected, and the receiver 3 starts operating as the STB 1 on the CEC line to which the receiver 3 is connected. Since some sort of mechanism for confirming the presence must be introduced for the mutually cooperating devices, the monitor 4 and the STB 1 are assumed to perform a search by transmitting Vendor(Ping) defined as a vendor command at predetermined intervals until Vendor(Ack) is returned as a response to the Vendor(Ping) to confirm the mutual presence, regardless of whether a wireless section exists, in the example depicted in Fig. 3. In this step, the mutual communication may be divided into a plurality of steps in a more complicated manner. Even if a wireless section exists, first, the monitor 4 performs a search by transmitting Vendor(Ping) defined as a vendor command at predetermined intervals until Vendor(Ack) is returned as a response to the Vendor(Ping) (step S11). This search processing may be described as the processing for starting operation in the response table in the storage portion 43 of the monitor 4.

At step S11, Vender(Ping) is transmitted through the CEC line (step S11a) first. When receiving Vender (Ping) at step S11a, the receiver 3 refers to the response table 33c to return an ACK bit as the STB 1 and transmits information indicative of Vendor(Ping) (i.e., a wireless message indicative of Vendor(Ping)) by wireless (step S12). At step S12, processing is also executed to store the logical address from which this Vendor(Ping) is transmitted (the logical address of the transmission source included in the Vender (Ping), which is "0" of the monitor 4 in this example) in the communication memory 33e. The device having the logical address stored at this step is judged as a counterpart device when pretending (imitating) as the STB 1, i.e., the counterpart of the paring operation. It is assumed that the response table 33c of the receiver 3 includes the specifications for such an operation, i.e., for returning an ACK bit to Vender(Ping), storing the logical address, and performing the wireless transmission of the information indicative of the Vender(Ping).

When receiving the wireless message, the transmitter 2 extracts Vender(Ping) from this wireless message and transmits the Vender(Ping) through the CEC line (step S13) . It is assumed that the response table 23c of the transmitter 2 includes the specifications for such an operation. When receiving the Vendor(Ping), the STB 1 refers to the response table in the storage portion 13 to return an ACK bit and transmit Vendor (Ack) as a response to the Vendor (Ping) through the CEC line (step S14). It is assumed that the response table in the storage portion 13 of the STB 1 includes the specifications for such an operation, i.e., for returning an ACK bit to Vender(Ping) and returning Vendor(Ack) as a response to the Vendor (Ping) (using the transmission source in the Vendor (Ping) as the destination).

When receiving the Vendor(Ack), the transmitter 2 refers to the response table 23c to return an ACK bit and store the logical address from which Vendor(Ack) is returned (the logical address of the transmission source included in the Vender (Ack), which is "3" of the STB 1 in this example) in the communication memory 23e (step S15). The device having the logical address stored at this step is judged as an object device when pretending (imitating) the monitor 4, i.e., the counterpart of the paring operation. The transmitter 2 transmits information indicative of Vendor(Ack) (i.e., a wireless message indicative of Vendor(Ack)) by wireless (step S16). It is assumed that the response table 23c of the transmitter 2 includes the specifications for such an operation, i.e., for returning an ACK bit to Vender(Ack), storing the logical address of the transmission source in the communication memory 23e, starting accepting the paring operation for the logical address, and transmitting the wireless message indicative of the Vender(Ack) by wireless.

When receiving the wireless message, the receiver 3 extracts Vender (Ack) from this wireless message and transmits the Vender (Ack) through the CEC line (step S17). It is assumed that the response table 33c of the receiver 3 includes the specifications for such an operation.

When receiving the Vender(Ack), the monitor 4 refers to the response table in the storage portion 43 to return an ACK bit and store the logical address from which the Vendor (Ack) is returned (the logical address of the transmission source included in the Vender (Ack), which is "3" of the STB 1 in this example) in the communication memory of the storage portion 43 and starts accepting the paring operation for the STB 1 at this timing (step S18). Therefore, the device having the logical address stored at this step is judged as the counterpart of the paring operation. It is assumed that the response table in the storage portion 43 of the monitor 4 includes the specifications for such an operation, i.e., for returning an ACK bit to Vender(Ack), storing the logical address of the transmission source into the communication memory, and starting accepting the paring operation for the logical address.

As described above, by utilizing the authentication communication among devices which operate in cooperation with each other, such as Vender (Ping), a device to be pretended in the present invention can be searched. If such a mechanism does not exist among devices, this can be implemented by presetting operations using fixed logical addresses of the devices which operate in cooperation with each other. Although it has been described that the notification of Vender ID must be given in advance before sending out Vender(Ping), if Vender(Ping) is sent out by using <Vendor Command With ID> instead of <Vendor Command>, it is not necessary to give the notification of Vender ID in advance. In this case, it is recommended to transmit <Device Vendor ID> and then, perform the communication by <Vendor Command> after sending out Vender(Ping) to check Vender(Ack).

Fig. 4 is a flowchart for explaining a process example when a remote controller is operated after the process at the time of power-on in the wireless transmission system of Fig. 1. It is described how the light receiving portion 47 operates when it receives an operation signal corresponding to Vendor Remote Down from the remote controller 5. Such an operation may be stored in the response tables of the devices as described with reference to Fig. 3.

First, the monitor 4 interprets the operation signal and refers to the response table to transmit a CEC command that is called Vendor Remote Down through the CEC line (step S21). When receiving this Vendor Remote Down, the receiver 3 refers to the response table 33c to return an ACK bit as the STB 1 and transmits information indicative of Vendor Remote Down (wireless message) by wireless (step S22). When receiving the wireless message, the transmitter 2 extracts Vendor Remote Down and refers to the response table 23c to transmit Vendor Remote Down through the CEC line as the monitor 4 (by using the logical address of the monitor 4 as the transmission source) to the destination that is the logical address stored in the communication memory 23e (the logical address stored at step S15) (step S23). When receiving the Vendor Remote Down, the STB 1 refers to the response table to return an ACK bit and executes a process corresponding to Vendor Remote Down (e.g., a process such as changing a channel) (step S24). The STB 1 can be operated from the remote controller 5 of the monitor 4 in this way.

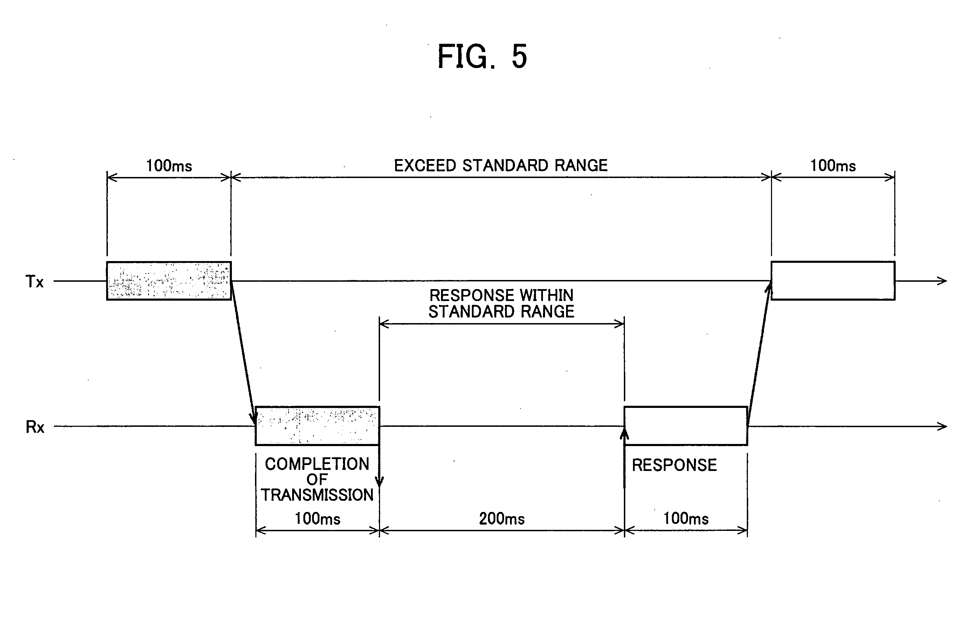

Fig. 5 is a diagram for explaining the case that a response is delayed when a certain CEC message is transmitted/received after the processing at the time of power-on in the wireless transmission system of Fig. 1. Although the pretense by the transmitter 2 and the receiver 3 as described with reference to Figs. 1 to 4 is very effective in preventing a delay, all the CEC messages transmitted to a pretended device (rather than all the CEC messages on the CEC line) must be transmitted if only this pretense is used. In the description of Fig. 1, etc., a portion described as transmitting "as needed basis" means that the transmission is performed "as needed basis in conformity with the CEC protocol".

If all the CEC messages to a pretended device are transmitted in this way, a band on the link is consumed and some commands become unsupportable among the commands requiring a response within a certain time period (e.g., a response <Set Stream Path> to a command <Routing Change>). In this description, a command sequence taken as an example is assumed to use a command requiring 100 ms from the start of transmission until the end of transmission and require a response within 300 ms. As exemplarily depicted in Fig. 5, when the transmitter 2 performs reception while buffering and performs transmission to the receiver 3 after completion, it takes extra 100 ms until the receiver 3 can complete transmission to the monitor 4 after the transmitter 2 completes the reception (although a communication delay is generated in a wireless transmission section to be exact, this is ignored for simplicity). It is assumed that the monitor 4 responds within 200 ms, which are within the range of the standard. When the receiver 3 completely receives the response and performs transmission to the transmitter 2 in the same way, it takes extra 100 ms until the transmitter 2 completes the transmission after the receiver 3 completes the reception. Therefore, although the response is made in 200 ms, which are within the range of the standard, on the CEC line to which the receiver 3 is connected, it takes 400 ms, which exceed the standard, on the CEC line to which the transmitter 2 is connected.

For a countermeasure, it is desirable to skip the wireless transmission for some CEC messages among CEC messages to a pretended device. Such processing will be described. If a delay described with reference to Fig. 5 is occurred (including the case that a delay is occurred due to insufficient band), the following processing may be executed.

The CEC control portion of the receiver 3 determines whether the transmission to the STB 1 (the transmitter 2) is necessary depending on a type of a CEC message (including the case of a vendor command) received from the monitor 4, and transmits the CEC message by wireless through the wireless connection portion 34 to the transmitter 2 only when it is determined that the transmission is necessary. The CEC control portion of the transmitter 2 also determines whether the transmission to the monitor 4 (the receiver 3) is necessary depending on a type of a CEC message received from the STB 1, and transmits the CEC message by wireless through the wireless connection portion 24 to the receiver 3 only when it is determined that the transmission is necessary. Such an operation may be described in the response tables 23c, 33c and executed by the CEC managers 23b, 33b.

More specifically, since a response of CEC may be returned as a fixed value or a value decided from contents of precedent communications given that a device to be imitated is identified, the response is made at the discretion of the transmitter 2/the receiver 3 without the transmitter 2/the receiver 3 communicating with the opposite side to acquire a result. Therefore, a problem of a response time can be solved and an amount of the communication can be reduced between the transmitter 2 and the receiver 3. An amount of the communication can further be reduced by transmitting parameters necessary only for this response and by only receiving and not transmitting a command unnecessary for the reaction when operating as TV or STB.

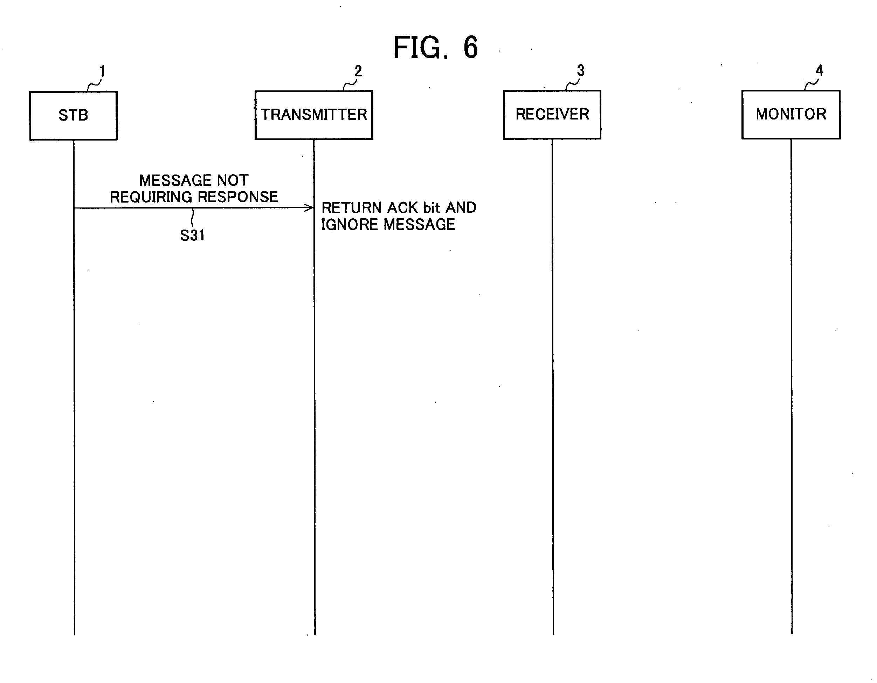

An example of such processing will be described with reference to Figs. 6 to 11. Figs. 6 to 11 are flowcharts for explaining process examples when a CEC message is transmitted from STB after the processing at the time of power-on in the wireless transmission system of Fig. 1.

As depicted in Fig. 6, the transmitter 2 receives a CEC message from the STB 1 (step S31) and, if the CEC message is determined as a CEC message not requiring a response, the transmitter 2 only returns an ACK bit and ignores the CEC message.

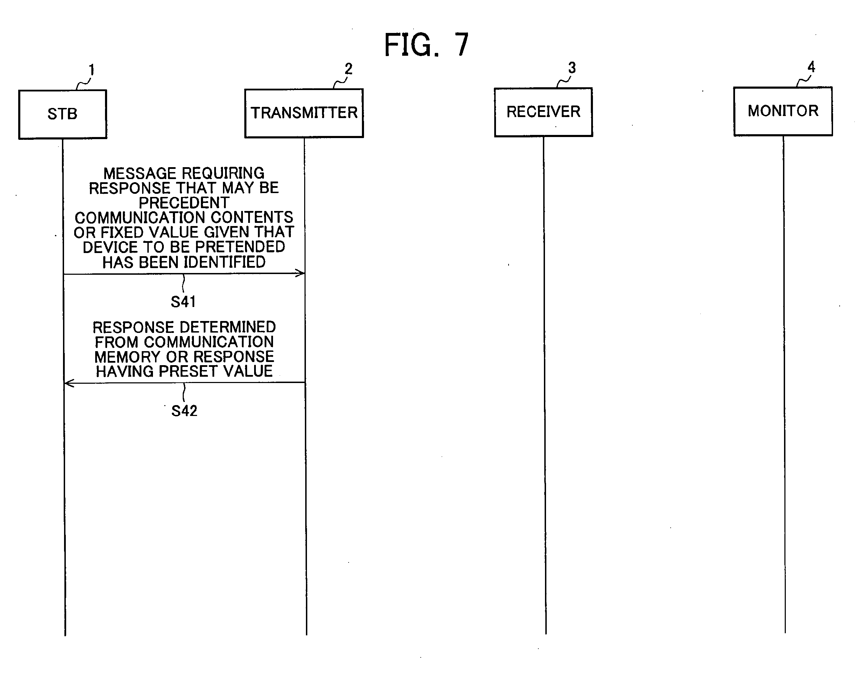

As depicted in Fig. 7, the transmitter 2 receives a CEC message from the STB 1 (step S41) and, if it is determined that although the CEC message requires a response, the response may be precedent communication contents (or a fixed value) given that a device to be pretended has been identified, the transmitter 2 returns an ACK bit and only returns a response determined from a history of communication with the monitor 4 in the communication memory 23 (or a response having a preset value) (step S42) without performing the wireless communication. <Give Power Status> can be cited as an example of the case that precedent communication contents may be used, and the response determined from the communication history in this case is <Report Power Status>. <Give Vendor ID> can be cited as an example of the case that a fixed value may be used, and the response having a preset value in this case is <Device Vendor ID>.

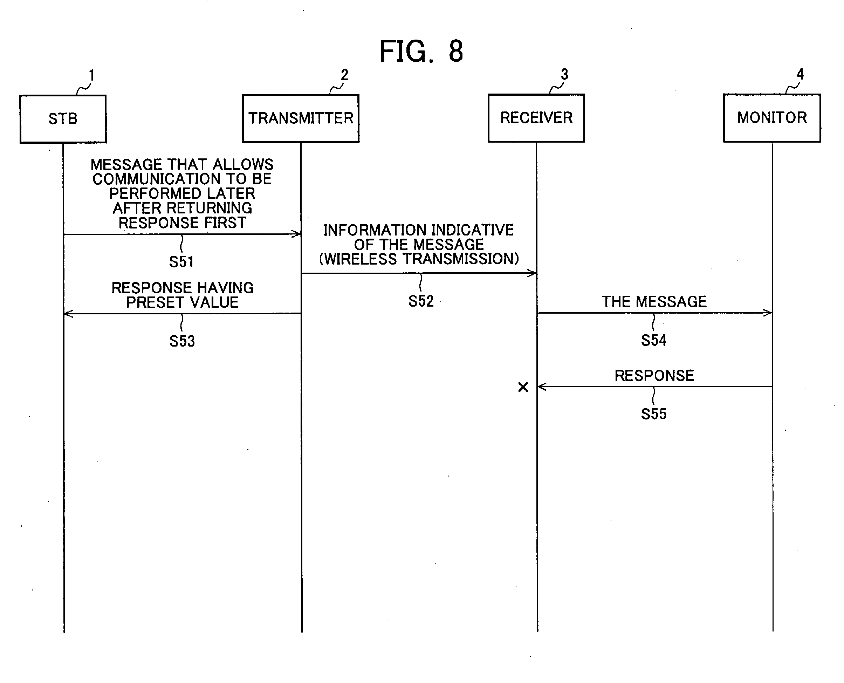

As depicted in Fig. 8, the transmitter 2 receives a CEC message from the STB 1 (step S51) and, if it is determined that the CEC message allows the communication with the monitor 4 to be performed later after returning a response first, the transmitter 2 returns an ACK bit, performs the wireless transmission of the information indicative of the message (step S52), and returns a response having a preset value to the STB 1 through the CEC line (step S53). An example of such a CEC message is <Routing Change> (only when the STB 1 is a repeater device, because this example is premised on the transmission from the STB 1 side) and the response having a preset value in this case is <Set Stream Path>. The order of step S52 and step S53 is not limited as long as the response of step S53 is made within the range of the standard. When receiving the wireless message of step S52, the receiver 3 transmits the CEC message indicated by the wireless message to the monitor 4 through the CEC line (step S54), and acquires a response thereto from the monitor 4 (step S55). The response is not necessary for the receiver 3 and may therefore be ignored.

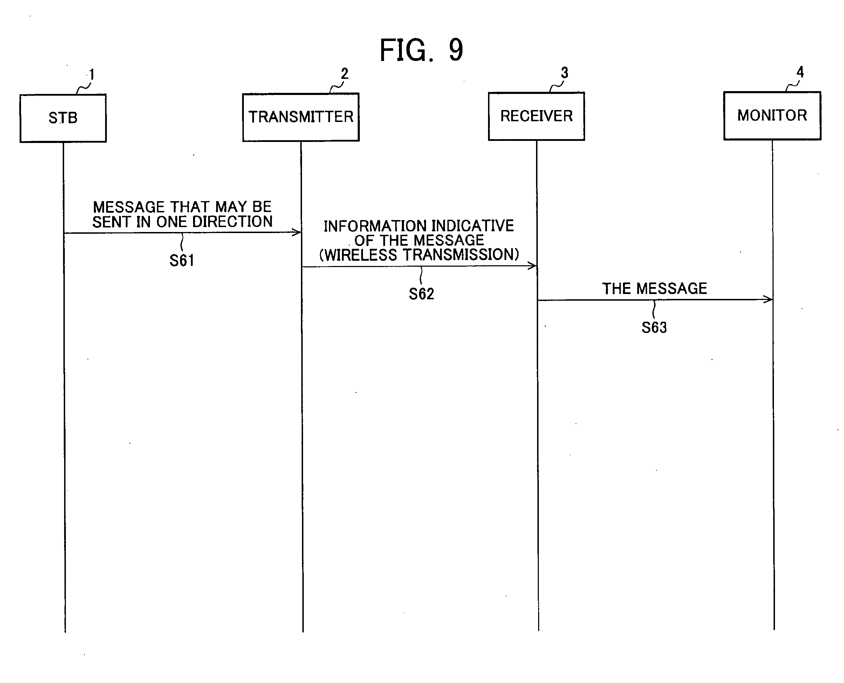

As depicted in Fig. 9, the transmitter 2 receives a CEC message from the STB 1 (step S61) and, if the CEC message is determined as a CEC message that may be sent in the only direction (e.g., <Image View ON>, i.e., the power-on instruction), the transmitter 2 returns an ACK bit and transmits the information indicative of the message by wireless (step S62). When receiving the information (the wireless message), the receiver 3 extracts and transmits the message to the monitor 4 through the CEC line (step S63).

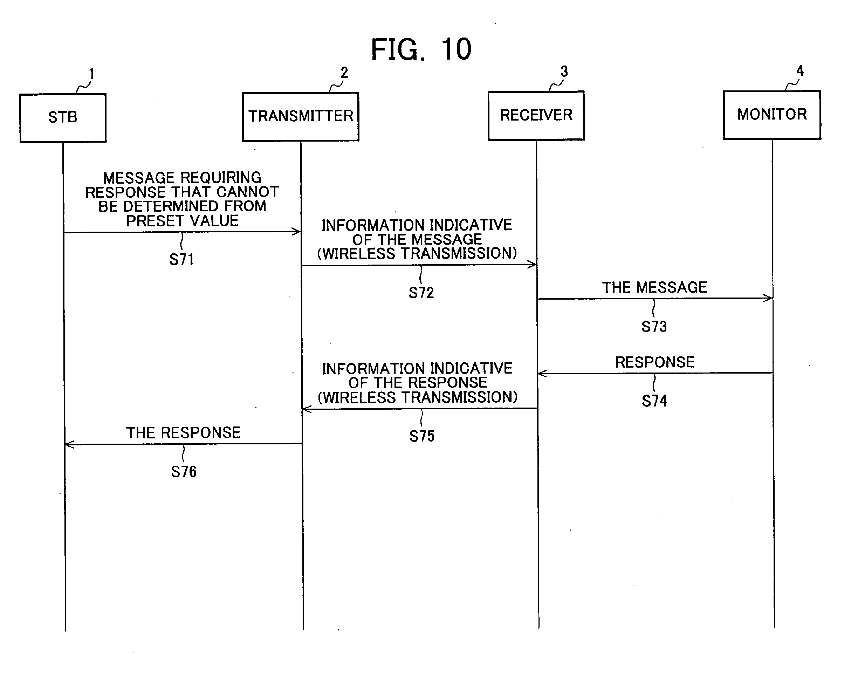

As depicted in Fig. 10, the transmitter 2 receives a CEC message from the STB 1 (step S71) and, if the CEC message is determined as a CEC message requiring a response that cannot be determined from a preset value, communication contents, etc. , the normal process is executed without a skip (steps S72 to S76) . The transmitter 2 returns an ACK bit and performs the wireless transmission of the information indicative of the message (step S72) and, when receiving the information, the receiver 3 extracts and transmits the message to the monitor 4 through the CEC line (step S73). The monitor 4 transmits a response thereto through the CEC line to the receiver 3 (step S74); the receiver 3 transmits the information indicative of the response by wireless (step S75); and when receiving the information, the transmitter 2 extracts and transmits the response to the STB 1 through the CEC line (step S76). An example of such a CEC message is <Vendor Command>, which is dependent on an arrangement in Vendor. The response thereto is defined in advance and stored in the response table of the monitor 4.

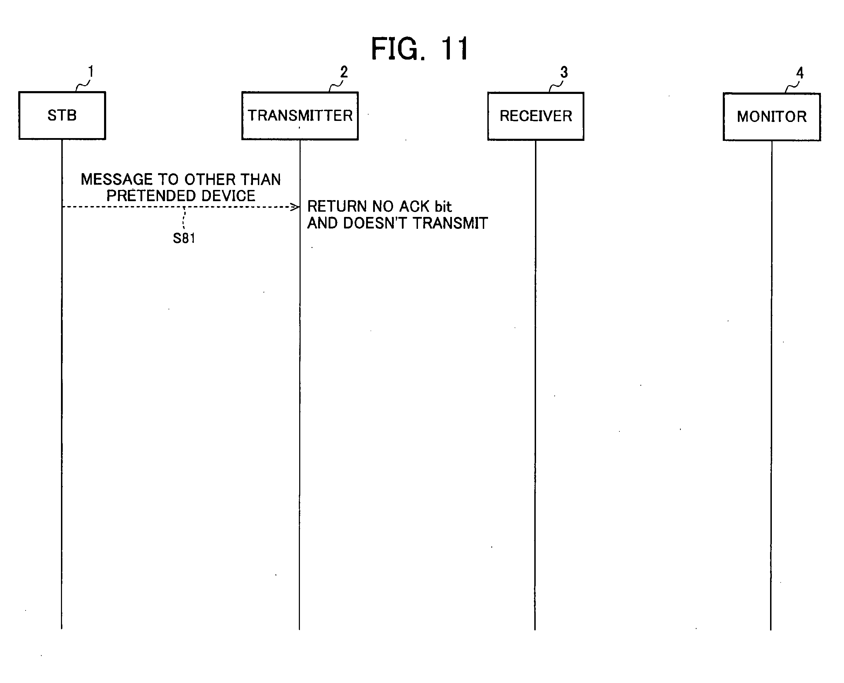

As depicted in Fig. 11, the transmitter 2 receives a CEC message from the STB 1 (step S81) and, if it is determined that the CEC message is communicated to other than the pretended device (i.e. , the monitor 4), the transmitter 2 does not return an ACK bit and does not perform wireless transmission.

Although the process examples in the case of transmitting a CEC message from the STB 1 have been described with reference to Figs. 6 to 11, process examples in the case of transmitting a CEC message from the monitor 4 are described in the same way in the reverse direction.

The transmitter 2 or the receiver 3 may control whether the wireless transmission is performed and whether the transmitter 2 or the receiver 3 returns a response as a substitute, depending on a time limit (response time) of a response defined in the CEC protocol, i.e., a response time limit.

Therefore, the receiver 3 determines whether the CEC message received from the monitor 4 is required to have a time limit for response to the monitor 4 that is shorter than a predetermined time. For the CEC message required to have a shorter time limit for response as a result of the determination, the receiver 3 makes a response as a substitute for the STB 1 (for the transmitter 2 in one sense) to the monitor 4. In this case, the wireless transmission to the transmitter 2 may not be performed. The wireless transmission may be performed for other CEC messages. The CEC manager 33b may be enabled to make the determination by referring to the response table 33c and this response may be a preset message defined in advance in the response table 33c for each CEC message.

In the same way, the transmitter 2 determines whether the CEC message received from the STB 1 is required to have a time limit for response to the STB 1 that is shorter than the predetermined time and makes a response as a substitute for the monitor 4 to the STB 1 for the CEC message required to have the shorter time limit for response. In this case, the wireless transmission to the receiver 3 may not be performed. The wireless transmission may be performed for other CEC messages. The CEC manager 23b may be enabled to make the determination by referring to the response table 23c and this response may be a preset message defined in advance in the response table 23c for each CEC message.

Such a form of controlling whether performing the wireless transmission or returning the response by itself depending on a time limit for response of a received CEC message (i.e., a type of a CEC message related to a time limit for response) may be implemented independently of the examples described with reference to Figs. 6 to 10 or may be applied to the examples described with reference to Figs. 7 and 8. In the latter case, the examples described with reference to Figs. 7 and 8 may be applied only to the CEC messages required to have a shorter time limit for response. In the examples of Figs. 9 and 10, a tentative response can be made by setting an appropriate response as a preset value without exceeding the standard range of the time limit for response. In such a form of controlling whether performing the wireless transmission or returning the response by itself, a CEC message may also unconditionally be ignored without returning a response and performing the wireless transmission in the case of the CEC message not requiring the wireless transmission as in the example of Fig. 6, and a CEC message may be ignored in the same way if the CEC message is destined to other than its own pretended device as in Fig. 11.

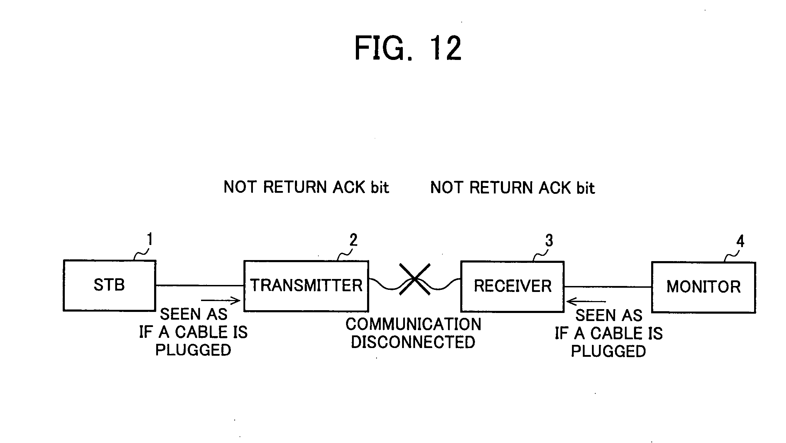

Fig. 12 is a schematic for explaining the case that the wireless transmission channel is unable to communicate through transmission/reception of a CEC message between the devices in the wireless transmission system of Fig. 1. In the case of wireless communication, the communication may be disconnected due to a radio wave condition. If a message is received in this state, the devices cannot communicate the massage between them. The reception of the message means that an ACK bit is returned, and it is determined on the transmission side that the communication is successful. As a result, the state comprehended on the transmission side becomes different from the state comprehended on the reception side, causing a breakup.

Therefore, when falling into a situation that makes the wireless transmission impossible, it is preferred not to return ACK bit even if the CEC communication is received. The CEC control portion of the receiver 3 returns no ACK bit to the monitor 4 even if a CEC message is received from the monitor 4 while falling into a situation that the receiver 3 cannot perform the wireless communication with the transmitter 2, and the CEC control portion of the transmitter 2 returns no ACK bit even if a CEC message is received from the STB 1 while falling into a situation that the transmitter 2 cannot perform the wireless communication with the receiver 3. Such an operation may be described in the response tables 23c, 33c and executed by the CEC managers 23b, 33b. The availability/unavailability of the wireless communication may be determined by storing a history of wireless communications (communication history for determining whether the communication is disconnected or available) in the communication memory 23e or the communication memory 33e in the transmitter 2 or the receiver 3 in advance and referring to this communication memory. In this case, the transmitter 2 and the receiver 3 may periodically attempt the wireless communication.

By employing such a process, CEC compatible devices recognize the situation as a state equivalent to drop-off of the HDMI cable and, after the recovery of the communication, the CEC compatible devices can be operated without a breakup.

### <Another Exemplary Configuration of Wireless Transmission System According to the Present Invention>

Although the transmitter 2 as depicted in Fig. 1 is externally coupled (externally connected) to the STB 1 and the receiver 3 is externally coupled (externally connected) to the monitor 4 in the exemplary configuration described as the system, a built-in configuration may be employed for one or both of the transmitter 2 and the receiver 3. The CEC control portion of the receiver 3 may be built into the monitor 4 and connected to the CEC control portion disposed in the monitor 4. Not only the CEC control portion but also the wireless connection portion 34 of the receiver 3 may be built-in. The CEC control portion of the transmitter 2 may be built into the STB 1 and connected to the CEC control portion disposed in the STB 1. Not only the CEC control portion but also the wireless connection portion 24 of the transmitter 2 may be built-in.

### <Wireless Transmission Method According to the Present Invention>

The present invention may employ the following form of a wireless transmission method as described the method for transmitting/receiving the CEC messages using a program or information. This program or information may be distributed through a portable recording medium, broadcast waves, an internet line, etc. Describing with the exemplary configuration of Fig. 1, the wireless transmission method according to the present invention uses the receiver 3 having a CEC control portion capable of transmitting/receiving a CEC message to/from the monitor 4 and the transmitter 2 having a CEC control portion capable of transmitting/receiving a CEC message to/from the STB 1 to transmit/receive a CEC message between the monitor 4 and the STB 1 through the wireless communication between the receiver 3 and the transmitter 2.

This wireless transmission method is mainly characterized by including a step of using a logical address corresponding to a device type of the STB 1 by the CEC control portion of the receiver 3 to transmit/receive a CEC message to/from the CEC control portion disposed in the monitor 4 and a step of using a logical address corresponding to a device type of the monitor 4 by the CEC control portion of the transmitter 2 to transmit/receive a CEC message to/from the CEC control portion disposed in the STB 1. Other applications are the same as those described for the wireless transmission system and will not be described.

### EXPLANATIONS OF REFERENCE NUMERALS

1...STB; 2...transmitter; 3...receiver; 4...monitor; 5...remote controller; 11, 21, 31, 41...wireline connection portion; 12, 22, 32, 42...control portion; 13, 23, 33, 43...storage portion; 14, 44...main control portion; 15...tuner portion; 23a, 33a...CEC driver; 23b, 33b...CEC manager; 23c, 33c...response table; 23d, 33d...wireless communication driver; 23e, 33e...communication memory; 24, 34...wireless connection portion; 45...video processing portion; 46...display portion; and 47...light receiving portion.

## Claims

1. A wireless transmission system comprising: a first wireless communication device having a CEC control portion capable of transmitting/receiving a CEC message in HDMI to/from a display device; and a second wireless communication device having a CEC control portion capable of transmitting/receiving a CEC message in HDMI to/from an AV device, the wireless transmission system performing transmission/reception of a CEC message between the display device and the AV device through wireless communication between the first wireless communication device and the second wireless communication device, wherein
the CEC control portion of the first wireless communication device using a logical address corresponding to a device type of the AV device to transmit/receive a CEC message to/from a CEC control portion disposed in the display device,
the CEC control portion of the second wireless communication device using a logical address corresponding to a device type of the display device to transmit/receive a CEC message to/from a CEC control portion disposed in the AV device.

2. The wireless transmission system as defined in claim 1, wherein
the first wireless communication device determines whether the transmission to the AV device is necessary depending on a type of a CEC message received from the display device and performs wireless transmission to the second wireless communication device only for the CEC message determined to have a need to be transmitted, and wherein
the second wireless communication device determines whether the transmission to the display device is necessary depending on a type of a CEC message received from the AV device and performs wireless transmission to the first wireless communication device only for the CEC message determined to have a need to be transmitted.

3. The wireless transmission system as defined in claim 1 or 2, wherein
the first wireless communication device determines whether a CEC message received from the display device is required to have a response time limit for the display device shorter than a predetermined time, and makes a response as a substitute for the AV device to the display device for the CEC message required to have the shorter response time limit, and wherein
the second wireless communication device determines whether a CEC message received from the AV device is required to have a response time limit for the AV device shorter than the predetermined time, and makes a response as a substitute for the display device to the AV device for the CEC message required to have the shorter response time limit.

4. The wireless transmission system as defined in any one of claims 1 to 3, wherein
the CEC control portion of the first wireless communication device returns no ACK bit to the display device even if a CEC message is received from the display device while falling into a situation that the first wireless communication device is unable to perform the wireless communication with the second wireless communication device, and wherein
the CEC control portion of the second wireless communication device returns no ACK bit even if a CEC message is received from the AV device while falling into a situation that the second wireless communication device is unable to perform the wireless communication with the first wireless communication device.

5. The wireless transmission system as defined in any one of claims 1 to 4, wherein
the CEC control portion of the first wireless communication device is externally connected to the CEC control portion disposed in the display device or is built into the display device and connected to the CEC control portion disposed in the display device, and wherein
the CEC control portion of the second wireless communication device is externally connected to the CEC control portion disposed in the AV device or is built into the AV device and connected to the CEC control portion disposed in the AV device.

6. A wireless transmission method using a first wireless communication device having a CEC control portion capable of transmitting/receiving a CEC message in HDMI to/from a display device and a second wireless communication device having a CEC control portion capable of transmitting/receiving a CEC message in HDMI to/from an AV device to perform transmission/reception of a CEC message between the display device and the AV device through wireless communication between the first wireless communication device and the second wireless communication device, the method including the steps of:
using a logical address corresponding to a device type of the AV device by the CEC control portion of the first wireless communication device to transmit/receive a CEC message to/from a CEC control portion disposed in the display device, and
using a logical address corresponding to a device type of the display device by the CEC control portion of the second wireless communication device to transmit/receive a CEC message to/from a CEC control portion disposed in the AV device.
